**Europäisches Patentamt**

**European Patent Office**

**Office européen des brevets**

(19)

(11) Publication number: **0 048 582**

**A1**

(12) # EUROPEAN PATENT APPLICATION

(21) Application number: **81304206.6**

(22) Date of filing: **15.09.81**

(51) Int. Cl.³: **E 04 C 2/24**

(30) Priority: **20.09.80 GB 8030463**

(43) Date of publication of application:
**31.03.82 Bulletin 82/13**

(84) Designated Contracting States:
**AT BE CH DE FR GB IT LI LU NL SE**

(71) Applicant: **TORVALE HOLDINGS LIMITED**
**Torvale Industrial Estate Pembridge**
**Leominster Herefordshire HR6 9LA(GB)**

(72) Inventor: **Kitchen, Laurence James**
**Hazledene**
**Canon Pyon Herefordshire(GB)**

(74) Representative: **Leach, John Nigel et al,**
**FORRESTER & BOEHMERT Widenmayerstrasse 4/1**
**D-8000 München 22(DE)**

(54) **Composite building slab and method and apparatus for making slabs.**

(57) A composite slab is made of woodwool (10) and semi-rigid foam (12) of synthetic plastics, with a reinforcing net (11) disposed either within the foam (12) or between the foam and the woodwool (10), the whole panel being rigidly secured together. Securing may be by adhesive, in which case the foam may be pre-formed and two or more layers (15,17) may be sandwiched together with the reinforcement (11) secured between them. Alternatively, the foam may be cured in situ and the reinforcement may then be within the body of the foam. Methods and apparatus for producing the composite slabs on a continuous or semi-continuous basis are described. Additional layers of woodwool (21) or of facing material such as bituminised felt or plastics foil (24) can be added to the slabs.

FIG.5

EP 0 048 582 A1

"Composite building slab and method and apparatus for making slabs"

This invention relates to a composite building slab and a method and apparatus for making slabs.

It specifically relates to slabs of a type comprising woodwool sheet in combination with a foamed synthetic plastics material.

The expression "woodwool" as the term is used herein, denotes a rigid structural material comprising fibres of wood bound by a cured binder such as hydraulic cement.

It has been proposed, for example in our prior British Patent No. 1,445,787, to form a composite slab from a pair of woodwool facing sheets, together with a central core of plastics material for example polyurethane, foamed in situ. The foam penetrates the interstices of the woodwool sheet and bonds the composite slab together.

Such a slab can only be formed from a plastics foam which has penetrative and adhesive properties. In the case of some foamed plastics, for example polystyrene, a laminated composite slab may be formed by the use of adhesive between the adjacent layers, the polystyrene being provided as a preformed sheet.

In each case, the woodwool provides fire resistance and strength, while the plastics foam provides thermal and noise insulation.

Such slabs are suitable for use in buildings, and are particularly suitable for use in roofing. However, Health and Safety Regulations concerning the safety of building workers requires that workmen be safeguarded against the possibility of falling through roofing panels on which they are working, and hence extremely high impact resistance is required of roofing slabs, if special building techniques such as the use of crawler boards is to be avoided.

It is an object of the present invention to provide a composite slab for building purposes which posseses improved impact resistance. It is a further object of the invention to provide a method and an apparatus for making one form of such a slab.

According to the invention there is provided a composite slab for building purposes comprising a first rigid layer comprising a sheet of woodwool as herein defined, a second layer comprising a foamed synthetic plastics material and a reticulated reinforcement layer disposed within or immediately adjacent the second layer, the layers being permanently bonded together.

Preferably, the reticulated reinforcement layer comprises a net or scrim of fibres of a synthetic plastics material such as nylon, polyethylene terephthalate or the like. The net may be woven or knotted.

Alternatively, a non-woven net of for example polyethylene, or a perforated synthetic plastics sheet material may be used.

The composite slab may include one or more further layers. For example, a further rigid layer comprising a woodwool sheet may be added to the face of the second layer opposed to the first rigid layer, to form a closed sandwich.

Alternatively, a permanent layer of flexible sheet material for decorative or protective purposes may be added. For example, the flexible sheet material may be synthetic plastics or metal foil, bituminised felt, paper, glass fibre or cloth.

The reticulated reinforcement layer may be secured to a face of the woodwool or of the foam, where these are adhesively secured together. However, it is preferred that the reticulated reinforcement layer is disposed within the second, foam layer.

Where the foam is provided as preformed sheets, a pair of foam sheets may be sandwiched together to enclose the reticulated reinforcement layer, the assembly being permanently bonded together by means of a suitable adhesive.

In one form of the invention, the foamed synthetic plastics material is foamed in situ and penetrates the interstices of the woodwool layer and of the reticulated reinforcement layer, during foaming, to bond the layers together.

The reticulated reinforcing layer may be supported above the general plane of the surface of the woodwool and the foam forming mixture may then be deposited thereon to penetrate the interstices of the reticulated reinforcing layer and of the woodwool.

Alternatively, foam forming mixture may be deposited on the woodwool, the reticulated reinforcing layer may be added, and a further layer of foam forming mixture may be added.

The invention also provides a method of making a composite slab as set out above and incorporating a synthetic plastics foam capable of penetrating into the interstices of woodwool, the method comprising the basic steps of feeding a plurality of sheets of woodwool (as herein defined) continuously through a depositor station, depositing on the woodwool a synthetic plastics foam forming mixture at the depositor station, laying a continuous reticulated reinforcing layer on the woodwool or the foam forming mixture, confining the foam forming mixture so as to cause it to penetrate into the interstices of the woodwool and of the reticulated reinforcing layer, and causing or allowing the foam forming mixture to cure and bond together the layers.

The composite slab may be fed through the nip of a pair of rollers during curing of the foam forming mixture.

The woodwool sheets may be fed successively through two or more depositor stations at which a foam forming mixture is deposited thereon, with the reticulated re-

inforcing layer being continuously laid on the previously deposited foam forming mixture, between adjacent depositor stations.

An endless band or web may be pressed against the upper surface of the foam forming mixture to confine it during curing, the band or web subsequently being removed from the surface.

Alternatively or additionally, a further permanent layer may be placed on the upper surface of the foam forming mixture.

The further permanent layer may comprise a plurality of further woodwool sheets or a flexible sheet material, for example for decorative or protective purposes. The flexible sheet material may be of synthetic plastics or metal foil, bituminised felt, paper, glass fibre or cloth for example.

The woodwool sheet forming the first and/or the further layer may itself include a reticulated reinforcing layer inserted in the woodwool before curing of the binder thereof.

The invention also provides a machine for making a composite slab by the method set out above, the machine comprising an endless conveyor adapted to receive woodwool sheets and to transport them continuously through a depositor station of the machine, at which a synthetic plastics foam forming mixture may be deposited on the woodwool sheets; continuous feed means for laying a continuous reticulated reinforcing layer on the woodwool or on the foam forming mixture; and confining means for confining the composite slab during foaming of the foam forming mixture.

The machine may include one or more additional depositor stations.

Where two or more depositor stations are provided, said continuous feed means may be disposed between adjacent depositor stations.

The machine may also include facing applying means for applying a further permanent layer to the composite slab.

The confining means for confining the composite slab during foaming thereof may comprise an endless band or web adapted to be pressed against the upper surface of the foam forming mixture or of the facing during curing of the foam forming mixture.

Pressure applying roller means may be provided to exert pressure on the band or web during curing of the foam forming mixture.

The invention will now be described in more detail by way of example only, with reference to the accompanying drawings in which:-

FIGURE 1 shows a first embodiment of a composite building slab incorporating preformed foam sheet;

FIGURE 2 shows a second embodiment of composite slab incorporating preformed foamed sheet;

FIGURE 3 shows a further embodiment of building slab incorporating a foam formed in situ;

FIGURE 4 shows a further embodiment of building slab incorporating a foam formed in situ and illustrating modifications; and

FIGURE 5 is a diagrammatic side elevational view of a machine for making composite building slabs of the general type illustrated in Figures 3 and 4 of the drawings.

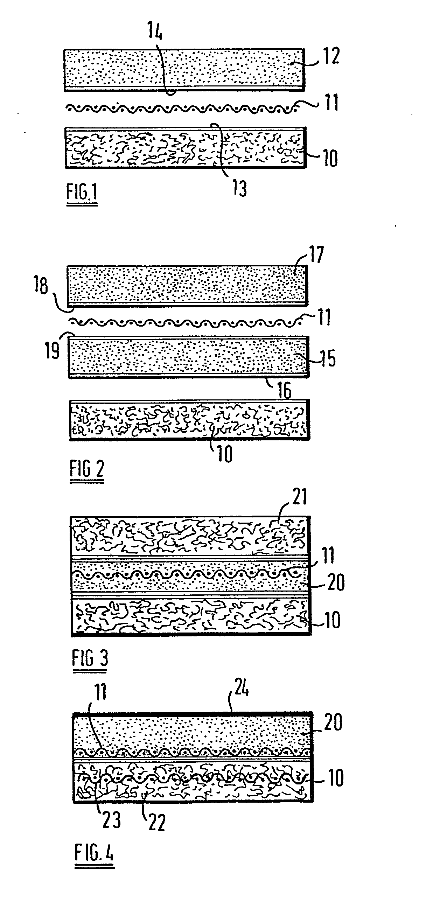

Referring firstly to Figures 1 and 2 of the drawings, these show composite building slabs in which a sheet of woodwool is combined with one or more preformed sheets of synthetic plastics foam. This technique is particularly useful where the foam is polystyrene, but may be useful where other types of foam are concerned.

In each case, a woodwool sheet 10 forms the structural basis of the slab. In Figure 1, a net or scrim reinforcement 11 is secured to one face of the woodwool sheet 10 and a preformed sheet of polystyrene foam 12 is secured adjacent the net 11. The whole assembly is secured by means of adhesive shown in layers 13 and 14, which interpenetrates the openings in the net reinforcement 11 and bonds to the woodwool and polystyrene foam.

Figure 2 shows a modification, in which a polystyrene foam sheet 15 is secured by an adhesive layer 16 directly to the woodwool sheet 10. A further polystyrene sheet 17 is then secured to the sheet 15 with a net reinforcement 11 being interposed between the two polystyrene sheets. Further layers of adhesive 18 and 19, penetrating through the openings in the net reinforcement 11, secure the assembly together.

The net reinforcement, in each case, may take a variety of forms. For example, a knotted net of nylon cord, having a mesh size of between about two and five centimetres has been found to give excellent results.

In order to test the impact strength of the slab, a heavy load is dropped on an unsupported span of the slab and an inspection is then made to ascertain whether the slab has been damaged. Both for large and for point loads, it is found that the presence of the net reinforcement 11 very substantially increases the impact resistance of the slab under single and repeated impact.

Although good results are obtained using the construction of Figure 1, it has been found that positioning the net reinforcement 11 between a pair of polystyrene sheets 15 and 17 increases still further the impact resistance. It is believed that the foam cushions and dissipates the localised loading on the net reinforcement to a greater extent when the net is provided between a pair of foam sheets in this manner, so as to increase the effectiveness of the net reinforcement.

Alternative forms of reinforcement may be used, for example in the form of a fine woven mesh or scrim, a knotted net, an adhesively secured net or the like. It is also possible to use an extruded type of net such as that marketed under the Registered Trade Mark NETLON. The reinforcement may be of any synthetic plastics material or fibre having adequate strength characteristics, provided that its characteristics are not adversely affected by the other components of the slab, for example the adhesive.

If it is desired to give the slab additional rigidity, a further layer of woodwool (not shown in Figures 1 and 2) may be added on top of the layers shown, the whole assembly being adhesively secured together. Furthermore, it is possible to introduce more than one layer of net reinforcement into the composite slab.

As an alternative, the upper surface of the foamed plastics material may be covered by means of a further permanent layer which may be of a flexible sheet material. For example, the layer may be a decorative sheet for example of paper, glass fibre or cloth, or may be for protective purposes, in which case it may be a waterproof sheet of synthetic platics or metal foil or of bituminised roofing felt.

Referring to Figures 3 and 4 of the drawings, the composite building slabs shown in those Figures are based on the use of a foam which has the capability of being foamed in situ, adjacent the surface of the woodwool, and which will penetrate into the interstices of the woodwool and of the reinforcement.

In Figure 3, a basic woodwool sheet 10 having an untreated and therefore somewhat porous upper surface, has a foam forming mixture deposited on it and allowed to foam in situ, whilst confined against the upper surface of the sheet 10. The foam may for example be polyurethane foam 20. A net reinforcement 11, which may be of any of the types referred to above, is suspended above the surface of the woodwool sheet 10, so that the polyurethane foam 20 penetrates both into the surface of the woodwool and into the openings in the net reinforcement 11.

In the example shown in Figure 3, a further woodwool slab 21 is added on top of the foam forming mixture which forms the polyurethane foam 20, and the resulting sandwich slab is allowed to cure. The polyurethane foam has adhesive properties so that the slab bonds together in a permanent manner.

Figure 4 of the drawings illustrates various modifications, including the omission of the further woodwool slab 21. At the left-hand side of the drawing, it will be seen that the woodwool sheet 10 has been replaced by a reinforced woodwool sheet 22, of the type described and claimed in our prior Patent Application No. 8931/78. This has a central layer of reinforcement 23, which is introduced into the woodwool prior to curing of the woodwool binder, usually hydraulic cement.

A net reinforcement 11 of any of the types referred to above is placed on the surface of the woodwool sheet 22 or 10 in direct contact with the surface and the foam forming mixture is then added on top of the reinforcement, to form the polyurethane foam 20.

In the modification shown at the right-hand side of Figure 4, a layer of roofing felt or similar flexible waterproof sheet material has been added to the top surface of the foam forming mixture prior to curing to form the polyurethane foam 20. Again, this roofing felt is held in place permanently by the adhesiive properties of the foam.

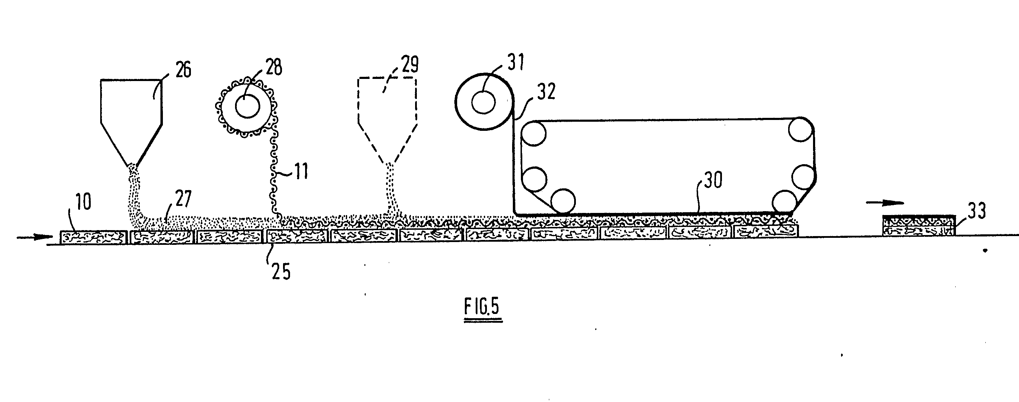

Figure 5 of the drawings shows a machine for producing, on a continuous or semi-continuous basis, composite building slabs of the general type illustrated by Figures 3 and 4 of the drawings, that is, using a penetrating and adhesive foam forming mixture which is cured directly in contact with the woodwool and net reinforcement.

The machine includes a conveyor 25 on which a plurality of woodwool sheets 10 are fed continuously from the left-hand side of the apparatus as shown. It would be possible to feed a continuous sheet of woodwool coming from a production line, instead of the separate sheets shown, provided that the woodwool was adequately cured at the time it entered the apparatus shown in the drawings.

The woodwool sheets pass through a first station 26 which has depositor means for depositing a foam forming mixture onto the upper surface of the woodwool sheets 10. The foam forming mixture is shown at 27.

The sheets 10 coated with the foam forming mixture 27 then pass beneath a feed roller arrangement 28 from which a net reinforcement 11 is fed onto the upper surface of the foam forming mixture. Optionally, a further foam forming mixture is deposited on top of the net reinforcement 11 at a second station 29, this being a useful procedure where a substantial thickness of foam is required in particular.

The coated woodwool sheets then pass beneath an endless band or web 30 which is typically of metal and which may be coated with a release composition to prevent it from adhering permanently to the foam. The band is pressed downwardly onto the upper surface of the foam forming mixture so as to confine it during foaming. The foam then penetrates into the upper surface of the woodwool sheets 10 and through the openings in the net reinforcement 11.

A second feed roller 31 is illustrated which may be used to feed a further permanent layer 32 onto the upper surface of the slabs being formed. This further permanent layer may be plastics or metal foil, glass fibre, or bituminised roofing felt for example, depending on the use to which the finished slabs are to be put. Where a further permanent layer is put onto the upper surface of the foam, the endless band 30 may in some circumstances be replaced by a pair of rollers acting directly on the permanent layer 32. It will be appreciated that the endless band 30 is also pressed against the upper surface of the foam by rollers.

In a further alternative (not shown) additional woodwool sheets are placed on top of the foam forming mixture before it passes under the endless band 30 so that the foam forming mixture bonds to both the upper and lower woodwool slabs and penetrates through the net reinforcement.

At the right-hand side of the drawing, a finished composite slab 33 is seen emerging from the apparatus.

In a modified form of the apparatus, the positions of the feed roller arrangement 28 and the first station 26 may be reversed so that the net reinforcement 11 is fed directly onto the upper surface of the woodwool sheets 10, and the foam forming mixture 27 is then added. The net reinforcement may be positioned directly against the woodwool sheets in the finished composite slab or alternatively, the woodwool sheets may previously be provided with some form of support means projecting from their upper surfaces so that the net reinforcement is automatically spaced away from the upper surfaces to enable the foam forming mixture to penetrate through and beneath it.

Various other modifications of the apparatus and method are possible in order to produce slabs having the desired characteristics. It will be appreciated that the apparatus as shown in Figure 5 can only be used where a foam forming mixture having penetrative and adhesive properties is being added to the woodwool sheet base, for example a polyurethane foam.

CLAIMS:

1. A composite slab for building purposes characterised in that it comprises a first rigid layer comprising a sheet of woodwool as herein defined, a second layer comprising a foamed synthetic plastics material and a reticulated reinforcement layer disposed within or immediately adjacent the second layer, the layers being permanently bonded together.

2. A slab according to Claim 1 further characterised in that the reticulated reinforcement layer comprises a net formed of a synthetic plastics material.

3. A slab according to Claim 1 or Claim 2 further characterised in that a further layer is provided comprising a woodwool sheet added to the face of the second layer which is opposed to the first rigid layer, to form a closed sandwich.

4. A slab according to Claim 1 or Claim 2 further characterised in that a further layer is provided comprising a permanent layer of flexible sheet material.

5. A slab according to Claim 4 further characterised in that the flexible sheet material comprises bituminised felt.

6. A slab according to Claim 1 wherein the reticulated reinforcement layer is secured to a face of the woodwool or of the foam, and wherein the woodwool and the foam are adhesively secured together.

7. A slab according to Claim 1 wherein the reticulated reinforcement layer is disposed within the second, foam layer.

8. A slab according to Claim 7 further characterised in that the foamed synthetic plastics material is foamed in situ and penetrates the interstices of the woodwool layer and of the reticulated reinforcement layer, during foaming, to bond the layers together.

9. A method of making a composite slab according to any one of Claims 1 to 8 and characterised in that it incorporates a synthetic plastics foam capable of penetrating into the interstices of woodwool, the method comprising the basic steps of feeding a plurality of sheets of woodwool (as herein defined) continuously through a depositor station; depositing on the woodwool a synthetic plastics foam forming mixture at the depositor station; laying a continuous reticulated reinforcing layer on the woodwool or the foam forming mixture; confining the foam forming mixture so as to cause it to penetrate into the interstices of the woodwool and of the reticulated reinforcing layer; and causing or allowing the foam forming mixture to cure and bond together the layers.

10. A method according to Claim 9 further characterised in that the woodwool sheets are fed successively through two or more depositor stations at each of which a foam forming mixture is deposited thereon, with the reticulated re-inforcing layer being continuously laid on the previously deposited foam forming mixture, between said depositor stations.

11. A method according to Claim 9 or Claim 10 wherein a further permanent layer is placed on the upper surface of the foam forming mixture before curing.

12. A machine for making a composite slab by the method according to any one of Claims 9 to 11, characterised in that it comprises an endless conveyor adapted to receive woodwool sheets and to transport them continuously through a depositor station of the machine, at which a synthetic plastics foam forming mixture is deposited on the woodwool sheets; continuous feed means for laying a continuous reticulated reinforcing layer on the woodwool or on the foam forming mixture; and confining means for confining the composite slab during foaming of the foam forming mixture.

13. A machine according to Claim 12 further characterised in that it includes one or more additional depositor stations and the continuous feed means are disposed between adjacent depositor stations.

14. A machine according to Claim 12 or Claim 13 including facing applying means for applying a further permanent layer to the composite slab.

FIG.1

FIG 2

FIG 3

FIG.4

FIG.5

## European Patent Office

## EUROPEAN SEARCH REPORT

Application number

EP 81 30 4206

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | CH – A – 392 834 (HORBACH)<br><br>* page 1, lines 51–74; figures 1,2 * | 1,2,6 | E 04 C 2/24 |
| | GB – A – 1 138 637 (BORTOLASO)<br><br>* page 1, lines 33–42; page 2, lines 95–100; figures 1,5 * | 1,2,3,<br>6 | |
| | FR – A – 1 395 480 (COLARD)<br><br>* page 1, column 1, lines 32–35; column 2, lines 9–25; figures * | 1,2,3,<br>6 | **TECHNICAL FIELDS SEARCHED (Int.Cl. 3)**<br><br>E 04 C |
| | US – A – 2 263 828 (SMITH)<br><br>* page 1, column 2, lines 1–18; figure 1 * | 1,7 | |
| | DE – A – 1 409 944 (SCHALLER)<br><br>* page 3, lines 1–11; page 6, lines 20–26; figures 1–3 * | 1,3 | |
| | DE – B – 1 299 105 (GRUNZWEIG)<br><br>* column 2, lines 1–21; figures * | 1,2,4 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| | FR – A – 2 003 281 (METECNO)<br><br>* page 1, lines 34–40; page 2, lines 1–37; figures 1,2 * | 1,3,4,<br>8,9,<br>11,<br>14 | &: member of the same patent family, corresponding document |

The present search report has been drawn up for all claims

| Place of search | Date of completion of the search | Examiner |
|---|---|---|
| THE HAGUE | 15-01-1982 | DALL'ANESE |

EPO Form 1503.1  06.78